# EUROPÄISCHE PATENTSCHRIFT

(11) **EP 2 744 741 B1**
(45) Veröffentlichungstag und Bekanntmachung des Hinweises auf die Patenterteilung: **31.05.2017**
(21) Anmeldenummer: 12738032.7
(22) Anmeldetag: 05.07.2012
(51) Int. Cl.: B66F 9/06, B62D 1/28, G05D 1/02

(54) **MOBILTEIL**
MOBILE PART
PIÈCE MOBILE

(30) Priorität: 16.08.2011 DE 102011110196
(43) Veröffentlichungstag der Anmeldung: 25.06.2014
(73) Patentinhaber: Sew-Eurodrive GmbH & Co. KG, 76646 Bruchsal (DE)
(72) Erfinder: SCHMIDT, Josef, 76676 Graben-Neudorf (DE); DEGEN, Dirk, 76646 Bruchsal (DE); JUNGINGER, Alexander, 75196 Remchingen-Wilferdingen (DE)
(86) Internationale Anmeldenummer: PCT/EP2012/002829
(87) Internationale Veröffentlichungsnummer: WO 2013/023721

(56) Entgegenhaltungen:
- EP-A1- 2 168 847
- DE-A1-102009 007 954
- DE-U1- 20 120 808
- FR-A1- 2 449 578
- JP-A- 2009 208 527
- US-A- 4 972 917
- US-A- 5 170 351
- US-A- 5 202 832
- US-A1- 2006 058 921

## Beschreibung

Die Erfindung betrifft ein Mobilteil.

Als Mobilteile sind Automobile oder Gabelstapler allgemein bekannt. Manche dieser Fahrzeuge weisen einen elektrischen Antrieb auf,
Aus der DE 201 20 808 U1 ist als nächstliegendem Stand der Technik ein Fördersystem mit zwischen Montagearbeitsplätzen verfahrbaren Flurförderfahrzeugen bekannt.

Aus der EP 2 168 847 A1 ist ein automatisch geführte Fahrzeugantriebsvorrichtung bekannt.

Aus der FR 2 449 578 A1 ist ein Fahrwagen bekannt, der translatorisch ausrichtbar ist.

Aus der JP 2009 208527 A ist ein Fahrantrieb bekannt, der bewegungsrichtungsfrei ist.

Aus der US 5 202 832 A ist ein Material-Handling-Automatisierungssystem bekannt, bei dem ein tragbares Transfermodul vorgesehen ist.

Aus der DE 10 2009 007954 A1 ist ein Verfahren zur Wegsteuerung eines Fahrzeugs bekannt.

Aus der US 5 170 351 A ist ein automatisch geführtes Fahrzeug bekannt und ein Verfahren zur Spurführung bekannt.

Aus der US 2006/058921 A1 ist ein mobiler Roboter bekannt.

Aus der US 4 972 917 ist eine Wagenfördereinheit bekannt.

Der Erfindung liegt daher die Aufgabe zugrunde, ein Mobilteil weiterzubilden, wobei ein einfaches Handling erreichbar sein soll, insbesondere eine Wartung des Antriebs oder der Elektronik einfach ausführbar sein soll.

Erfindungsgemäß wird die Aufgabe bei dem Mobilteil nach den in Anspruch 1 angegebenen Merkmalen gelöst.

Wichtige Merkmale der Erfindung bei dem Mobilteil sind, dass das Mobilteil eine Elektronikeinheit und eine Aufnahmeeinheit, insbesondere Aufnahmeplatte, aufweist,
wobei die Elektronikeinheit einen elektrischen Antrieb, insbesondere umfassend einen Elektromotor, und von dem elektrischen Antrieb antreibbare Antriebsrollen zum Bewegen des Mobilteils entlang einer Verfahrfläche, insbesondere also Verfahrebenenabschnitt, aufweist,
wobei
die Aufnahmeeinheit mittels Rollen, insbesondere Lenkrollen, abgestützt und/oder bewegbar ist zum Bewegen des Aufnahmeteils entlang der Verfahrfläche, insbesondere also Boden, insbesondere in verschiedene Richtungen,
wobei die Elektronikeinheit drehbar gelagert ist an der Aufnahmeeinheit, insbesondere wobei die Drehachse senkrecht zur Verfahrfläche.

Von Vorteil ist dabei, dass die Aufnahmeeinheit über Rollen auf der Verfahrfläche abgestützt und gehalten ist. Somit ist keine Gewichtskraft der Aufnahmeeinheit über die Elektronikeinheit an die Verfahrfläche abzuleiten. Die Elektronikeinheit weist selbst Antriebsrollen auf, so dass ihre Gewichtskraft über diese an die Verfahrfläche leitbar ist. Somit ist die Wartung der Elektronikeinheit einfach ausführbar, da die Aufnahmeeinheit hierzu nicht beeinflusst werden muss. Ein einfaches Entkoppeln der beiden Einheiten genügt.

Bei einer vorteilhaften Ausgestaltung weist die Elektronikeinheit Hilfsrollen auf, mit welcher sie entlang der Verfahrfläche bewegbar ist nach Anheben der Antriebsrollen mittels einer an der Elektronikeinheit angeordneten Hebevorrichtung, insbesondere Servicekralle, zum Anheben der Antriebsrollen (7). Von Vorteil ist dabei, dass eine einfache Wartung erreichbar ist. Bei Deaktivieren, insbesondere Anheben der Antriebsrollen von der Verfahrfläche weg, der Antriebsrollen sind Hilfsrollen vorhanden, die die Gewichtskraft ableiten.

Bei einer vorteilhaften Ausgestaltung ist die drehbare Lagerung der Elektronikeinheit am Aufnahmeteil mittels eines Gleitlagers ausgeführt. Von Vorteil ist dabei, dass ein kostengünstiges Drehlager verwendbar ist und Axialkräfte vom Lager aufnehmbar sind.

Bei einer vorteilhaften Ausgestaltung ist an der Aufnahmeeinheit Nuten zur Befestigung einer Last und/oder eine Fördervorrichtung, insbesondere Rollbahn, für eine Last mit elektrisch antreibbaren und/oder nicht antreibbaren Rollen, oder eine Hubgabel, ein Hubtisch oder ein anderes Handlingsystem angeordnet,
insbesondere wobei die elektrische Versorgung der Fördervorrichtung von der Elektronikeinheit aus durchgeführt wird. Von Vorteil ist dabei, dass das Mobilteil zwischen zwei Förderbänder positionierbar ist und auf der Aufnahmeeinheit eine Fördervorrichtung als Last anbringbar ist, die dann das von den Förderbändern herangeförderten Transportgut in einfacher Weise aufnimmt.

Bei einer vorteilhaften Ausgestaltung weist das Gehäuse der Elektronikeinheit ein Unterteil, insbesondere wannenartige ausgeformtes Unterteil, und ein darauf aufgesetztes Oberteil, insbesondere Gehäusedeckel, auf,
insbesondere wobei das Gleitlager zwischen der Aufnahmeplatte und dem Unterteil angeordnet ist. Von Vorteil ist dabei, dass ein Abnehmen oder Aufklappen des Oberteils genügt, um die Elektronik und/oder den Antrieb zugänglich zu machen.

Bei einer vorteilhaften Ausgestaltung ist die Hebevorrichtung zum Anhebender Antriebsrollen derart ausgeführt ist, dass das Unterteil der Elektronikeinheit beim Anheben der Rollen das Unterteil sich derart der Verfahrfläche nähert, dass die Hilfsrollen die Verfahrfläche berühren. Von Vorteil ist dabei, dass das Abtrennen der Elektronikeinheit von der Aufnahmeeinheit in einfacher Weise ausführbar ist, indem die Einheiten im Bereich des Gleitlager entkoppelt werden. Vorzugsweise wird dies durch eine Hebevorrichtung bewirkt, die die Antriebsrollen anhebt und dabei einen am Elektronikeinheit herausragenden Achsabschnitt aus einer als Aufnahmebohrung fungierenden Ausnehmung in der Aufnahmeeinheit herausdrückt. Dabei ist vorteiligerweise die Antriebsrolle und/oder der zugehörige Antrieb von der restlichen Elektronikeinheit relativ bewegbar. An der restlichen Elektronikeinheit ist der herausragende Achsabschnitt angeordnet, so dass bei dem anheben die restliche Elektronikeinheit zur Verfahrfläche gedrückt wird und dabei der Achsabschnitt den Kontakt zur Aufnahmebohrung verliert, wodurch das Gleitlager aufgetrennt ist und somit die Elektronikeinheit auf den Hilfsrollen herausfahrbar ist.

Bei einer vorteilhaften Ausgestaltung ist das Oberteil abnehmbar, insbesondere aufklappbar. Von Vorteil ist dabei, dass eine einfache Wartung ausführbar ist.

Bei einer vorteilhaften Ausgestaltung weist die Aufnahmeplatte eine Ausnehmung zur Kabeldurchführung auf, so dass Kabel und/oder Steckverbinderteil hindurchführbar ist zur elektrischen Versorgung einer auf der Aufnahmeplatte aufgenommenen Last, insbesondere Förderbahn, Rollenbahn und/oder Signallampe. Von Vorteil ist dabei, dass die Last als elektrischer Verbraucher ausführbar ist.

Bei einer vorteilhaften Ausgestaltung weist die Elektronikeinheit zumindest eine Sekundärwicklung, insbesondere eine von einem Übertragerkopf umfasste Sekundärwicklung, auf, die an einen in oder an der Verfahrfläche verlegten Primärleiter induktiv ankoppelbar ist, so dass die Elektronikeinheit, insbesondere samt deren elektrischer Antrieb, elektrisch versorgbar ist. Von Vorteil ist dabei, dass eine kontaktlose Energieversorgung ermöglicht ist und somit das Mobilteil in Anlagen der Nahrungsindustrie oder chemischen Industrie oder in explosionsgeschützter Umgebung einsetzbar ist

Bei einer vorteilhaften Ausgestaltung weist die Elektronikeinheit ein Spurführungsmittel auf, mit welchem das Mobilteil entlang einer in der Verfahrfläche angeordneten Markierung oder entlang eines in der Verfahrfläche angeordneten Leitdrahtes führbar ist,
insbesondere wobei der Primärleiter auch als Leitdraht fungiert,
insbesondere wobei die bei der Spurführung verwendete Stromanteile eine höhere Frequenz aufweisen als die Frequenz des in den Primärleiter eingespeisten Stromes zur Übertragung von Versorgungsenergie für das Mobilteil. Von Vorteil ist dabei, dass eine einfache Bahnführung ermöglicht ist, ohne dass ein aufwendiges Navigationssystem installiert werden muss.

Bei einer vorteilhaften Ausgestaltung ist der Sekundärwicklung eine Kapazität derart in Reihe und/oder parallel zugeschaltet, dass die Resonanzfrequenz des so gebildeten Schwingkreises im Wesentlichen der Frequenz des in den Primärleiter zur Versorgung des Mobilteils eingeprägten Stromanteils entspricht. Von Vorteil ist dabei, dass ein hoher Wirkungsgrad erreichbar ist.

Bei einer vorteilhaften Ausgestaltung ist an der Elektronikeinheit und/oder an der Aufnahmeplatte ein Not-Aus-Schalter angeordnet. Von Vorteil ist dabei, dass ein schnelles Abschalten ermöglicht ist.

Bei einer vorteilhaften Ausgestaltung ist an der Aufnahmeplatte, insbesondere an einer Ecke der Aufnahmeplatte ein Sicherheitssensor zur Überwachung eines Sicherheitsbereichs angeordnet. Von Vorteil ist dabei, dass die Sicherheit erhöht ist.

Bei einer vorteilhaften Ausgestaltung ist eine Arretiervorrichtung, insbesondere eine elektrisch, magnetisch oder mechanisch betätigbare Arretiervorrichtung zum Verbinden oder Trennen der Aufnahmeplatte von der Elektronikeinheit am Mobilteil vorgesehen, insbesondere an der Elektronikeinheit oder an der Aufnahmeplatte. Von Vorteil ist dabei, dass ein Trennen in einfacher Weise ermöglicht ist.

Bei einer vorteilhaften Ausgestaltung umfasst die Arretiervorrichtung das Gleitlager oder aktiviert oder deaktiviert zumindest das Gleitlager oder trennt dieses auf. Von Vorteil ist dabei, dass ein einfaches Handling ausführbar ist.

Weitere Vorteile ergeben sich aus den Unteransprüchen.

Die Erfindung wird nun anhand von Abbildungen näher erläutert:

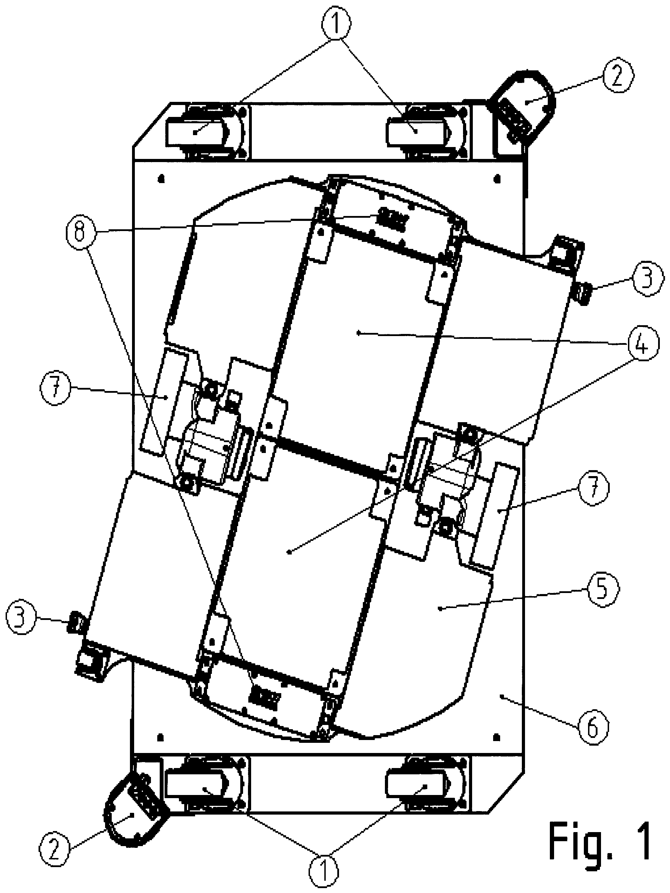

In der Figur 1 ein Mobilteil eines fahrerlosen Transportsystems, insbesondere automated guided vehicle AGV, also automatisch geführte Mobileinheit, in Draufsicht von unten gezeigt.

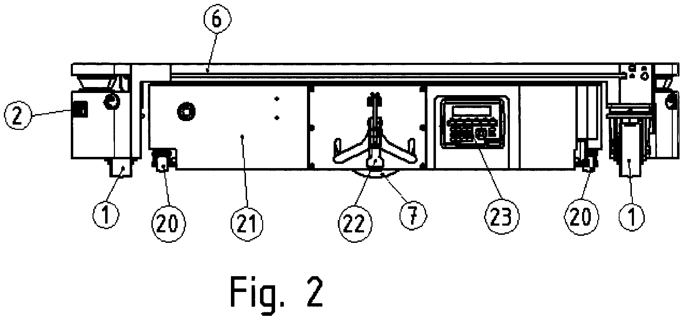

In der Figur 2 ist eine zugehörige Seitenansicht gezeigt.

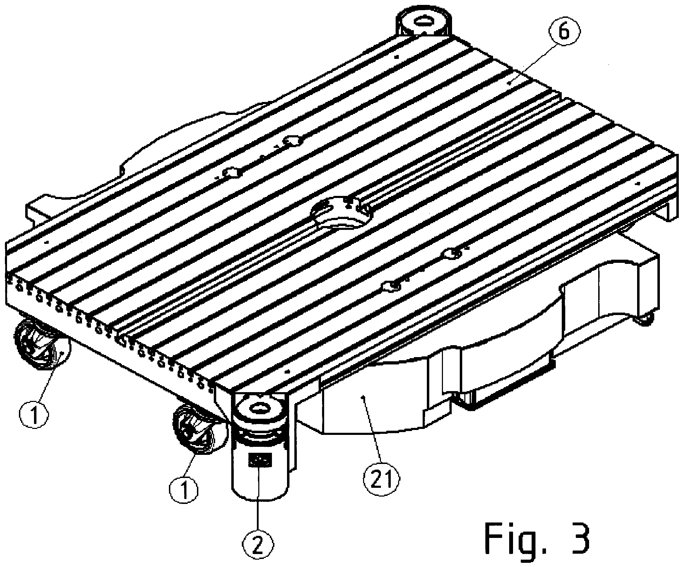

In der Figur 3 ist eine zugehörige Schrägansicht gezeigt.

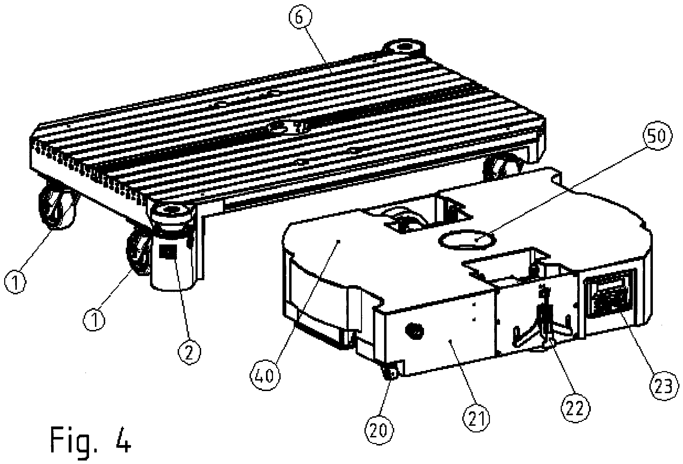

In der Figur 4 ist das Mobilteil mit separierter Elektronikeinheit 5 gezeigt.

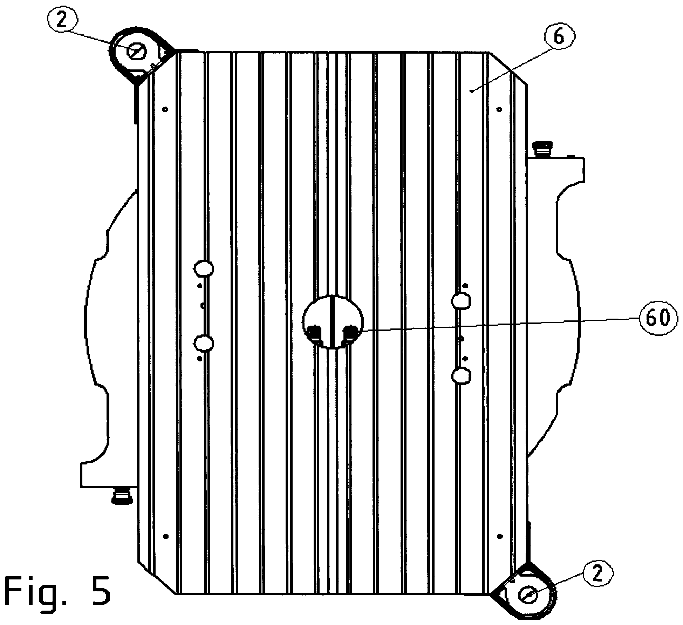

In der Figur 5 ist eine Draufsicht auf das Mobilteil gezeigt.

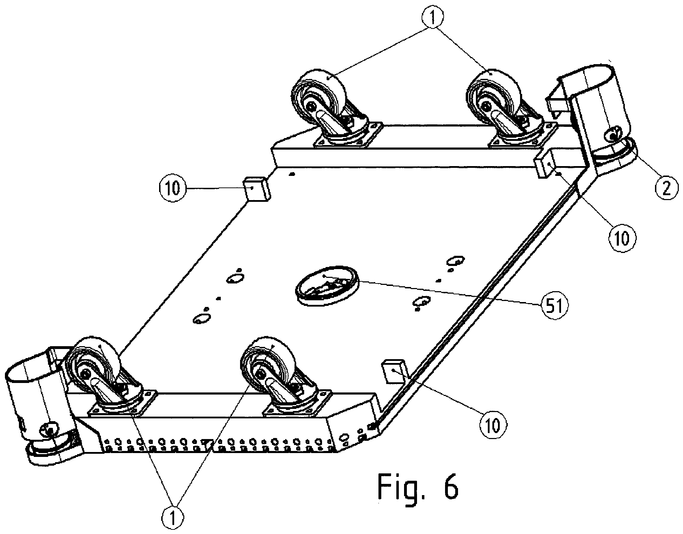

Figur 6 zeigt die Lastaufnahme.

Das erfindungsgemäße Mobilteil ist ein flächengeführtes Fahrzeug und weist eine Aufnahmeplatte 6 zur Aufnahme einer Last auf. Dabei sind an der Oberseite, also der der Laste zugewandten Seite der Aufnahmeplatte 6, Nuten in die Aufnahmeplatte 6 eingearbeitet, so dass eine Befestigung der Last mit Nutensteinen oder dergleichen Befestigungsmitteln ermöglicht ist.

Des Weiteren ist eine Kabelführung durch einen Bereich der Nuten zu einem Sensor vorgesehen.

Außerdem weist die Aufnahmeplatte 6 eine Ausnehmung zur Durchführung einer elektrischen Anschlussvorrichtung, insbesondere Steckverbinderteil, und/oder eines elektrischen Kabels auf, so dass eine elektrische Versorgung der Last und/oder eine Datenübertragung zur an der Unterseite der Aufnahmeplatte 6 angeordneten Elektronikeinheit 5 ermöglicht ist.

An der Aufnahmeplatte 6 sind Lenkrollen 1 verbunden. Diese Lenkrollen 1 sind also in ihrer Fahrtrichtung frei, indem das Lager der Lenkrollen selbst drehbar gelagert ist an der Aufnahmeplatte 6, wobei die Drehachse parallel zur Normalenrichtung der Platte ausgerichtet ist. Bei einer weiteren erfindungsgemäßen Ausführung sind zusätzlich Anschläge bei einer Verdrehung der Rollen um einen Winkelbetrag von etwa 90° vorgesehen.

Wie in der Figur gezeigt, ist die Elektronikeinheit 5 mittels eines Gleitlagers, dessen Drehachse ebenfalls in Normalenrichtung der Ebene der Aufnahmeplatte 6 und/oder der Verfahrebene ausgerichtet ist, drehbar gelagert an der Aufnahmeplatte 6.

An der Unterseite der Elektronikeinheit 5 sind zwei Antriebsrollen 7 angeordnet, die jeweils von einem elektrischen Antrieb, insbesondere aufweisend einen Elektromotor, antreibbar sind. Bei unterschiedlicher Drehzahl wird daher die Fahrtrichtung geändert, bei synchroner Drehzahl wird die Elektronikeinheit 5 und auch die an ihr drehbar gelagerte Aufnahmeplatte 6 in Fahrtrichtung bewegt.

Die Lenkrollen 1 passen sich in ihrer Ausrichtung der jeweiligen, von den Antriebsrollen vorgegebenen Fahrtrichtung an.

An der Elektronikeinheit ist eine Hebevorrichtung 22, insbesondere Servicekralle zum Anheben der Antriebsrollen 7, angeordnet. Somit sind die Antriebsrollen 7 relativ zu einem umgebenden Abschnitt der Elektronikeinheit 5, der ein Gehäuseteil 21 aufweist, anhebbar. Beim Anheben verlieren die Antriebsrollen 7 den Bodenkontakt und die Elektronikeinheit 5 wird von Hilfsrollen 20 getragen, welche beim Anheben der Antriebsrollen 7 in Bodenkontakt kommen. Die Hilfsrollen, deren Rollenachse parallel zur Verfahrebene ausgerichtet ist, sind über ein Lager in einem Lageraufnahmeteil gelagert, das wiederum drehbar gelagert ist in der Elektronikeinheit 5, wobei die Drehachse parallel zur Normalenrichtung der Verfahrebene ist.

Da an der Elektronikeinheit 5 Hilfsrollen 20 angeordnet sind, ist diese Elektronikeinheit 5 bei angehobenen Antriebsrollen 7 bewegbar und kann daher nach Trennen der Verbindung zur Aufnahmeplatte 6 unter dieser herausgezogen werden.

Die Elektronikeinheit 5 umfasst auch die beiden Elektromotoren, welche jeweils eine Antriebsrolle 7 antreiben. Die Elektromotoren sind hierbei auch als Direktantriebe oder Getriebemotoren ausführbar.

An der Aufnahmeplatte 6 ist auch ein Sensor 2 zur Überwachung eines Sicherheitsbereichs vorgesehen. Die Sensorsignale werden drahtgebunden oder drahtlos übertragen zu einer Steuerelektronik, welche in der Elektronikeinheit 5 angeordnet ist. Somit ist bei Detektion eines Hindernisses oder Eindringen eines Objektes oder Menschen im Sicherheitsbereich eine entsprechende Aktion von der Steuerelektronik auslösbar, wie beispielsweise ein Abschalten der Antriebe, insbesondere Elektromotoren, oder ein Begrenzen der Drehzahl der Antriebe und/oder der Geschwindigkeit des Mobilteils auf einen Sicherheitswert und/oder das Anzeigen einer Warninformation und/oder Weitermelden einer Warninformation.

Ein Not-Aus-Schalter 3 ist an der Elektronikeinheit 5 angeordnet. Alternativ oder zusätzlich ist auch ein Not-Aus-Schalter 3 an der Aufnahmeplatte anordenbar.

Somit ist mittels des Not-Aus-Schalters 3 im Notfall ein Abschalten ermöglicht und somit die Sicherheit erhöht.

Des Weiteren weist die Elektronikeinheit 5 an ihrer dem Boden zugewandten Unterseite zwei voneinander in Fahrtrichtung beabstandete Übertragerköpfe 4, insbesondere jeweils umfassend eine Sekundärwicklung, auf. Auf diese Weise ist also das Mobilteil mittels eines bodenverlegten Primärleiters induktiv mit Energie und/oder Information versorgbar.

Infolge der Beabstandung der beiden Übertragerköpfe 4 ist ein unversorgter Bereich überbrückbar. Beispielsweise ist somit die Versorgung des Mobilteils ununterbrochen, wenn die Versorgung von einem ersten Primärleiter auf einen zweiten Primärleiter gewechselt wird und während das Mobilteil sich im Übergangsbereich befindet.

Der Verbindungsbereich zwischen Elektronikeinheit 5 und Aufnahmeplatte 6 umfasst ein Gleitlager, dessen Drehachse parallel zur Normalenrichtung der Verfahrebene ausgerichtet ist. Durch die somit gegenüber der Aufnahmeplatte 6 drehbare Anordnung der Elektronikeinheit 5 ist es ermöglicht, dass bei einer Veränderung der Fahrtrichtung der Elektronikeinheit 5 in der Verfahrebene die Aufnahmeplatte 6 unverändert ausgerichtet bleibt oder nur langsam ihre Ausrichtung ändert. Insbesondere bei ruckartiger Fahrtrichtungsänderung bleibt die Ausrichtungsänderung der Aufnahmeplatte 6 ruckfrei oder zumindest ruckbegrenzt. Außerdem ist zum Einparken in einer Parklücke am Fahrbahnrand die Elektronikeinheit um 90° zur Fahrtrichtung verdrehbar und dann ein quer ausgeführtes Einparken ermöglicht. Dabei bleibt die Aufnahmeplatte 6 in Fahrtrichtung ausgerichtet und wird sozusagen seitlich in die Parklücke verschoben.

Die Aufnahmeplatte überdeckt einen Bereich in der Verfahrebene, welcher den von der Elektronikeinheit 5 in der Verfahrebene abgedeckten Bereich enthält, wobei dieser Bereich ein echter Teilbereich des von der Aufnahmeplatte 6 in der Verfahrebene abgedeckten Bereichs ist.

An der Elektronikeinheit 5 ist auch eine Spurführungsantenne 8 angeordnet, so dass die Elektronikeinheit 5 entlang einer vorgegebenen Bahnkurve führbar ist, indem im Boden ein elektrischer Leiter verlegt ist entlang der Bahnkurve. Statt einer solchen Funkwellengestützten Spurführung ist aber auch eine optische oder induktive Spurführung ausführbar, wobei dann die Spurführungsantenne 8 als optischer Sensor, welcher zur Detektion einer optisch markierten Linie anstatt des Leiters vorgesehen ist, beziehungsweise induktiv an den Leiter gekoppelte Sekundärwicklung ausführbar ist.

Die Elektronikeinheit 5 weist außerdem eine Anzeigeeinheit 23 mit Eingabemitteln zur Dateneingabe für Steuerelektronik auf. Somit sind antriebsbezogene Parameter an der Elektronikeinheit 5 eingebbar und/oder anzeigbar.

Zwischen Aufnahmeplatte 6 und Elektronikeinheit 5, insbesondere Gehäuseteil 21, ist als Drehlager ein Gleitlager 50 vorgesehen, dessen Drehachse in Normalenrichtung zur Verfahrebene ausgerichtet ist.

Ein Gehäusedeckel 40 ist ein Teil des Gehäuses der Elektronikeinheit 5 und ist abnehmbar von der restlichen Elektronikeinheit 5 oder aufklappbar an dieser befestigt.

Das restliche Gehäuse der Elektronikeinheit ist wannenartig aufgebaut, so dass der Gehäusedeckel 40 als Oberteil oder Deckel zu diesem wannenartigen Unterteil fungiert.

Das Aufnahmeteil 6 weist eine Ausnehmung auf, so dass elektrische Kabel und ein Gegensteckverbinderteil hindurchführbar sind zur Verbindung mit dem Steckverbinderteil 60, welches an der Elektronikeinheit 5 angeordnet ist. Dabei ist die auf dem Aufnahmeteil 6 aufgesetzte Last während des Transportes mit Energie und/oder Information versorgbar. Alternativ oder zusätzlich ist auch eine am Aufnahmeteil angeordnete Signallampe mit Energie versorgbar oder es ist eine Rollenbahn, wobei zumindest eine der Rollen einen elektrischen Antrieb aufweist, auf dem Aufnahmeteil 6 anordenbar und mit Energie aus der Elektronikeinheit 5 versorgbar.

Bei weiteren erfindungsgemäßen Ausführungsbeispielen ist das zwischen Aufnahmeplatte 6 und Elektronikeinheit 5 angeordnete Gleitlager mit einem den Verdrehwinkel zwischen der Aufnahmeplatte 6 und der Elektronikeinheit 5 steuernden oder auf einen Sollwinkel hin regelnden Drehantrieb ausgestattet. Auf diese Weise ist die Aufnahmeplatte auch bei veränderlicher Fahrtrichtung des Mobilteile in einer gewünschten Ausrichtung haltbar.

### Bezugszeichenliste

- 1: Lenkrollen
- 2: Sensor zur Überwachung eines Sicherheitsbereichs
- 3: Not-Aus-Schalter
- 4: Übertragerkopf, insbesondere umfassend Sekundärwicklung
- 5: drehbare Elektronikeinheit
- 6: Aufnahmeplatte zur Aufnahme einer Last
- 7: Antriebsrolle, angetrieben durch elektrischen Antrieb
- 8: Spurführungsantenne
- 10: Begrenzungsmittel
- 20: Hilfsrollen
- 21: Gehäuseteil für drehbare Elektronikeinheit 5
- 22: Hebevorrichtung, insbesondere Servicekralle, zum Anheben der Antriebsrollen 7
- 23: Anzeigeeinheit mit Eingabemitteln zur Dateneingabe für Steuerelektronik
- 40: Gehäusedeckel
- 50: Gleitlager zwischen Aufnahmeplatte 6 und Gehäuseteil 21
- 51: Gleitlager zwischen Aufnahmeplatte 6 und Gehäuseteil 21
- 60: Steckverbinderteil

## Patentansprüche

1. Mobilteil,
aufweisend eine Elektronikeinheit (5) und eine Aufnahmeeinheit, insbesondere Aufnahmeplatte (6),
wobei die Elektronikeinheit einen elektrischen Antrieb, insbesondere umfassend einen Elektromotor, und von dem elektrischen Antrieb antreibbare Antriebsrollen (7) zum Bewegen des Mobilteils entlang einer Verfahrfläche, insbesondere also Verfahrebenenabschnitt, aufweist,
**wobei** die Aufnahmeeinheit mittels Rollen, insbesondere Lenkrollen (1), abgestützt und/oder bewegbar ist zum Bewegen des Aufnahmeteils entlang der Verfahrfläche, insbesondere also Boden, insbesondere in verschiedene Richtungen,
wobei die Elektronikeinheit drehbar gelagert ist an der Aufnahmeeinheit, insbesondere wobei die Drehachse senkrecht zur Verfahrfläche,
**dadurch gekennzeichnet, dass die Elektronikeinheit** Hilfsrollen (20) **aufweist, mit welcher sie entlang der Verfahrfläche bewegbar ist nach Anheben der Antriebsrollen mittels einer an der Elektronikeinheit angeordneten** Hebevorrichtung (22), **insbesondere Servicekralle, zum Anheben der Antriebsrollen (7).**

2. Mobilteil nach Anspruch 1,
**dadurch gekennzeichnet, dass**
die drehbare Lagerung der Elektronikeinheit am Aufnahmeteil mittels eines Gleitlagers (50, 51) ausgeführt ist.

3. Mobilteil nach mindestens einem der vorangegangenen Ansprüche,
**dadurch gekennzeichnet, dass**
an der Aufnahmeeinheit Nuten zur Befestigung einer Last und/oder eine Fördervorrichtung, insbesondere Rollbahn, für eine Last mit elektrisch antreibbaren und/oder nicht antreibbaren Rollen, angeordnet ist,
insbesondere wobei die elektrische Versorgung der Fördervorrichtung von der Elektronikeinheit aus durchgeführt wird.

4. Mobilteil nach mindestens einem der vorangegangenen Ansprüche,
**dadurch gekennzeichnet, dass** das Gehäuse (21) der Elektronikeinheit ein Unterteil, insbesondere wannenartige ausgeformtes Unterteil, und ein darauf aufgesetztes Oberteil, insbesondere Gehäusedeckel (40), aufweist, insbesondere wobei das Gleitlager zwischen der Aufnahmeeinheit und dem Unterteil angeordnet ist.

5. Mobilteil nach mindestens einem der vorangegangenen Ansprüche,
**dadurch gekennzeichnet, dass**
die Hebevorrichtung zum Anhebender Antriebsrollen derart ausgeführt ist, dass das Unterteil der Elektronikeinheit beim Anheben der Rollen das Unterteil sich derart der Verfahrfläche nähert, dass die Hilfsrollen die Verfahrfläche berühren.

6. Mobilteil nach Anspruch 4,
**dadurch gekennzeichnet, dass**
das Oberteil abnehmbar ist, insbesondere aufklappbar.

7. Mobilteil nach mindestens einem der vorangegangenen Ansprüche,
**dadurch gekennzeichnet, dass**
die Aufnahmeeinheit eine Ausnehmung zur Kabeldurchführung aufweist, so dass Kabel und/oder Steckverbinderteil (60) hindurchführbar ist zur elektrischen Versorgung einer auf der Aufnahmeeinheit aufgenommenen Last, insbesondere Förderbahn, Rollenbahn und/oder Signallampe.

8. Mobilteil nach mindestens einem der vorangegangenen Ansprüche,
**dadurch gekennzeichnet, dass**
die Elektronikeinheit zumindest eine Sekundärwicklung, insbesondere eine von einem Übertragerkopf umfasste Sekundärwicklung, aufweist, die an einen in oder an der Verfahrfläche verlegten Primärleiter induktiv ankoppelbar ist, so dass die Elektronikeinheit, insbesondere samt deren elektrischer Antrieb, elektrisch versorgbar ist.

9. Mobilteil nach mindestens einem der vorangegangenen Ansprüche,
**dadurch gekennzeichnet, dass**
die Elektronikeinheit ein Spurführungsmittel (8) aufweist, mit welchem das Mobilteil entlang einer in der Verfahrfläche angeordneten Markierung oder entlang eines in der Verfahrfläche angeordneten Leitdrahtes führbar ist,
insbesondere wobei der Primärleiter auch als Leitdraht fungiert,
insbesondere wobei die bei der Spurführung verwendete Stromanteile eine höhere Frequenz aufweisen als die Frequenz des in den Primärleiter eingespeisten Stromes zur Übertragung von Versorgungsenergie für das Mobilteil.

10. Mobilteil nach Anspruch 8,
**dadurch gekennzeichnet, dass**
der Sekundärwicklung eine Kapazität derart in Reihe und/oder parallel zugeschaltet ist, dass die Resonanzfrequenz des so gebildeten Schwingkreises im Wesentlichen der Frequenz des in den Primärleiter zur Versorgung des Mobilteils eingeprägten Stromanteils.

11. Mobilteil nach mindestens einem der vorangegangenen Ansprüche,
**dadurch gekennzeichnet, dass** an der Elektronikeinheit und/oder an der Aufnahmeeinheit ein Not-Aus-Schalter (3) angeordnet ist

12. Mobilteil nach mindestens einem der vorangegangenen Ansprüche,
**dadurch gekennzeichnet, dass**
an der Aufnahmeeinheit, insbesondere an einer Ecke der Aufnahmeeinheit ein Sicherheitssensor (2) zur Überwachung eines Sicherheitsbereichs angeordnet ist.

13. Mobilteil nach mindestens einem der vorangegangenen Ansprüche,
**dadurch gekennzeichnet, dass**
eine Arretiervorrichtung, insbesondere eine elektrisch, magnetisch oder mechanisch betätigbare Arretiervorrichtung zum Verbinden oder Trennen der Aufnahmeeinheit von der Elektronikeinheit am Mobilteil vorgesehen ist, insbesondere an der Elektronikeinheit oder an der Aufnahmeeinheit.

14. Mobilteil nach einem der Ansprüche 2 oder 13,
**dadurch gekennzeichnet, dass**
die Arretiervorrichtung das Gleitlager umfasst oder zumindest das Gleitlager aktiviert oder deaktiviert, insbesondere auftrennt.

## Claims

1. Mobile part,
having an electronic unit (5) and an accommodating unit, in particular an accommodating plate (6),
wherein the electronic unit has an electric drive, in particular comprising an electric motor, and drive rollers (7) drivable by the electric drive for moving the mobile part along a travel surface, i.e. in particular a travel plane section,
wherein the accommodating unit is supported and/or movable by means of rollers, in particular steering rollers (1), for moving the accommodating part along the travel surface, i.e. in particular ground, in particular in different directions, wherein the electronic unit is rotatably mounted on the accommodating unit, in particular wherein the axis of rotation is perpendicular to the travel surface,
**characterised in that**
the electronic unit has auxiliary rollers (20), with which it is movable along the travel surface after lifting of the drive rollers by means of a lifting device (22) arranged on the electronic unit, in particular service claw, for lifting the drive rollers (7).

2. Mobile part according to claim 1,
**characterised in that**
the rotatable mounting of the electronic unit on the accommodating part is carried out by means of a slide bearing (50, 51) .

3. Mobile part according to one of the preceding claims, **characterised in that**
on the accommodating unit there are arranged grooves for fastening a load and/or a conveying device, in particular rolling path, for a load with electrically drivable and/or non-drivable rollers,
in particular wherein the electrical supply of the conveying device is carried out from the electronic unit.

4. Mobile part according to at least one of the preceding claims,
**characterised in that**
the housing (21) of the electronic unit has a lower part, in particular trough-like shaped lower part, and an upper part, in particular housing cover (40), placed thereon,
in particular wherein the slide bearing is arranged between the accommodating unit and the lower part.

5. Mobile part according to at least one of the preceding claims,
**characterised in that**
the lifting device for lifting the drive rollers is designed in such a way that the lower part of the electronic unit on lifting of the rollers the lower part approaches the travel surface in such a way that the auxiliary rollers contact the travel surface.

6. Mobile part according to Claim 4,
**characterised in that**
the upper part is detachable, in particular hingedly openable.

7. Mobile part according to at least one of the preceding claims,
**characterised in that**
the accommodating unit has a cutout for cable lead-through, so that cable and/or plug connector part (60) can be led through for electrical supply of a load accommodated on the accommodating unit, in particular conveying path, rolling path and/or signal lamp.

8. Mobile part according to at least one of the preceding claims,
**characterised in that**
the electronic unit has at least one secondary winding, in particular a secondary winding comprised of a pick-up, which can be inductively coupled to a primary conductor laid in or on the travel surface, so that the electronic unit, in particular together with its electric drive, can be electrically supplied.

9. Mobile part according to at least one of the preceding claims,
**characterised in that**
the electronic unit has a tracking means (8), with which the mobile part is guidable along a marking arranged in the travel surface or along a guide wire arranged in the travel surface, in particular wherein the primary conductor also acts a guide wire,
in particular wherein the current components used in the tracking have a higher frequency than the frequency of the current fed into the primary conductor for transmitting supply energy for the mobile part.

10. Mobile part according to Claim 8,
**characterised in that**
a capacitance is connected in series and/or parallel with the secondary winding in such a way that the resonant frequency of the resonant circuit thus formed is substantially the frequency of the current component applied to the primary conductor for supplying the mobile part.

11. Mobile part according to at least one of the preceding claims,
**characterised in that**
an emergency cutout switch (3) is arranged on the electronic unit and/or on the accommodating unit.

12. Mobile part according to at least one of the preceding claims,
**characterised in that**
a safety sensor (2) for monitoring a safety area is arranged on the accommodating unit, in particular at a corner of the accommodating unit.

13. Mobile part according to at least one of the preceding claims,
**characterised in that**
a locking device, in particular an electrically, magnetically or mechanically operable locking device, is provided for connecting or disconnecting the accommodating unit from the electronic unit on the mobile part, in particular on the electronic unit or on the accommodating unit.

14. Mobile part according to one of Claims 2 or 13, **characterised in that**
the locking device comprises the slide bearing or at least activates or deactivates the slide bearing, in particular separates it.

## Revendications

1. Elément mobile,
présentant une unité électronique (5) et une unité de réception, en particulier une plaque de réception (6),
l'unité électronique présentant un entraînement électrique, en particulier comprenant un moteur électrique, et des galets d'entraînement (7) pouvant être entraînés par l'entraînement électrique pour déplacer l'élément mobile le long d'une surface de déplacement, en particulier donc d'une section de plan de déplacement,
l'unité de réception étant en appui et/ou mobile au moyen de galets, en particulier de galets de guidage (1), pour déplacer l'unité de réception le long de la surface de déplacement, en particulier donc du sol, en particulier dans différentes directions, l'unité électronique étant montée rotative sur l'unité de réception, en particulier l'axe de rotation étant perpendiculaire à la surface de déplacement,
**caractérisé en ce**
**que** l'unité électronique présente des galets auxiliaires (20) avec lesquels elle est déplaçable le long de la surface de déplacement après levage des galets d'entraînement au moyen d'un dispositif de levage (22) disposé sur l'unité électronique, en particulier d'une griffe de service, pour lever les galets d'entraînement (7).

2. Elément mobile selon la revendication 1,
**caractérisé en ce**
**que** le montage rotatif de l'unité électronique sur la partie de réception est réalisé au moyen d'un palier lisse (50, 51).

3. Elément mobile selon au moins l'une des revendications précédentes,
**caractérisé en ce**
**que** sur l'unité de réception sont disposés des rainures pour la fixation d'une charge et/ou un dispositif de transport, en particulier un transporteur à rouleaux, pour une charge avec des galets entraînables et/ou non entraînables électriquement,
en particulier l'alimentation électrique du dispositif de transport étant réalisée à partir de l'unité électronique.

4. Elément mobile selon au moins l'une des revendications précédentes,
**caractérisé en ce**
**que** le boîtier (21) de l'unité électronique présente une partie inférieure, en particulier une partie inférieure réalisée en forme de cuvette et une partie supérieure posée dessus, en particulier un couvercle de boîtier (40), en particulier le palier lisse étant disposé entre l'unité de réception et la partie inférieure.

5. Elément mobile selon au moins l'une des revendications précédentes,
**caractérisé en ce**
**que** le dispositif de levage pour lever les galets d'entraînement est réalisé de sorte que, lors du levage des galets, la partie inférieure de l'unité électronique se rapproche de la surface de déplacement de sorte que les galets auxiliaires touchent la surface de déplacement.

6. Elément mobile selon la revendication 4,
**caractérisé en ce**
**que** la partie supérieure est amovible, en particulier relevable.

7. Elément mobile selon au moins l'une des revendications précédentes,
**caractérisé en ce**
**que** l'unité de réception présente un évidement pour le passage de câbles, de sorte que l'on peut y faire passer des câbles et/ou des parties de connecteur (60) pour l'alimentation électrique d'une charge reçue sur l'unité de réception, en particulier une bande transporteuse, un transporteur à rouleaux et/ou une lampe de signalisation.

8. Elément mobile selon au moins l'une des revendications précédentes,
**caractérisé en ce**
**que** l'unité électronique présente au moins un enroulement secondaire, en particulier un enroulement secondaire entouré par une tête de transmission qui peut être couplé par induction à un conducteur primaire posé dans ou sur la surface de déplacement, de sorte que l'unité électronique, en particulier avec son entraînement électrique, peut être alimentée électriquement.

9. Elément mobile selon au moins l'une des revendications précédentes,
**caractérisé en ce**
**que** l'unité électronique présente un moyen de guidage (8) avec lequel l'élément mobile peut être guidé le long d'un marquage disposé dans la surface de déplacement ou le long d'un fil de guidage disposé dans la surface de déplacement,
en particulier le conducteur primaire servant aussi de fil de guidage,
en particulier les composantes de courant utilisées lors du guidage présentant une fréquence plus élevée que la fréquence du courant injecté dans le conducteur primaire pour la transmission d'énergie d'alimentation pour l'élément mobile.

10. Elément mobile selon la revendication 8,
**caractérisé en ce**
**que** l'enroulement secondaire est branché en série et/ou en parallèle à une capacité de telle façon que la fréquence de résonance du circuit oscillant ainsi formé corresponde sensiblement à la fréquence de la composante de courant appliquée au conducteur primaire pour l'alimentation de l'élément mobile.

11. Elément mobile selon au moins l'une des revendications précédentes,
**caractérisé en ce**
**qu'**un interrupteur d'arrêt d'urgence (3) est disposé sur l'unité électronique et/ou sur l'unité de réception.

12. Elément mobile selon au moins l'une des revendications précédentes,
**caractérisé en ce**
**qu'**un capteur de sécurité (2) pour surveiller une zone de sécurité est disposé sur l'unité de réception, en particulier à un angle de l'unité de réception.

13. Elément mobile selon au moins l'une des revendications précédentes,
**caractérisé en ce**
**qu'**un dispositif de blocage, en particulier un dispositif de blocage à actionnement électrique, magnétique ou mécanique pour accoupler ou désaccoupler l'unité de réception de l'unité électronique est prévu sur l'élément mobile, en particulier sur l'unité électronique ou sur l'unité de réception.

14. Elément mobile selon l'une des revendications 2 ou 13,
**caractérisé en ce**
**que** le dispositif de blocage comprend le palier lisse ou au moins active ou désactive, en particulier sépare, le palier lisse.
